# EUROPÄISCHE PATENTSCHRIFT

(11) **EP 0 553 613 B1**
(45) Veröffentlichungstag und Bekanntmachung des Hinweises auf die Patenterteilung: **06.09.1995**
(21) Anmeldenummer: 93100117.6
(22) Anmeldetag: 07.01.1993
(51) Int. Cl.: B62D 1/20, F16D 1/08

(54) **Einrichtung zum Verbinden einer Lenksäule eines Kraftfahrzeuges**
Device for connecting a steering column of a motor vehicle
Dispositif d'accouplement pour une colonne de direction d'un véhicule automobile

(30) Priorität: 31.01.1992 DE 4202684
(43) Veröffentlichungstag der Anmeldung: 04.08.1993
(73) Patentinhaber: ETABLISSEMENT SUPERVIS, FL-9490 Vaduz (LI)
(72) Erfinder: Oertle, Max, F-9493 Mauren (LI)
(74) Vertreter: Hefel, Herbert, Dipl.-Ing.

(56) Entgegenhaltungen:
- EP-A- 0 292 442
- EP-A- 0 323 298
- EP-A- 0 445 591
- DE-A- 4 013 810
- FR-A- 2 624 083

## Beschreibung

Die Erfindung bezieht sich auf eine Einrichtung zum Verbinden einer Lenksäule eines Kraftfahrzeuges mit einem Wellenzapfen eines Lenkgetriebes, wobei die Einrichtung ein im Querschnitt U-förmiges Kupplungsstück aufweist, das um eine Querachse schwenkbar an der Lenksäule angelenkt ist und in den Seitenwangen des U-förmigen Kupplungsstückes fluchtend zueinander angeordnete Bohrungen zur Aufnahme einer gegen Verdrehung gesicherten Spannschraube vorgesehen sind und die Spannschraube mittels einer Mutter fixierbar ist.

Einrichtungen vergleichbarer Art sind in folgenden vorveröffentlichten Druckschriften gezeigt und beschrieben: EP-OS 323 298, FR-OS 2620 997, EP-OS 292 442, EP-OS 319 149, EP-OS 300 854, DE-OS 3226 981 und US-PS 4012 155. In diesem Zusammenhang sind vor allem die Konstruktionen nach den europäischen Offenlegungsschriften 323 298 und 445 591 von Interesse, die alle im Oberbegriff des Anspruchs 1 definierten Merkmale aufweisen und die so ausgelegt sind, daß diese Einrichtungen mit einer Hand montiert werden können. Die Platzverhältnisse im Motorraum eines Kraftfahrzeuges sind häufig derart knapp bemessen, daß die zu verbindenden Teile nur mehr mit einer Hand manipuliert werden können. Die vorstehend erwähnten Konstruktionen sind für diese Art der Montage entwickelt worden und dafür auch im Grunde geeignet, ihr konstruktiver Aufwand ist jedoch relativ hoch.

Der Vollständigkeit halber sei hier auch noch die FR-PS 2 624 083 genannt, die bei einer Einrichtung der gegenständlichen Art eine aus Blech gefertigte Montagehilfe zeigt, die die Aufgabe hat sicherzustellen, daß die Spannschraube erst dann in das U-förmige Kupplungsstück einsetzbar ist, wenn der Wellenzapfen des Lenkgetriebes seine tatsächliche montagegerechte Lage im Kupplungsstück eingenommen hat. Diese Montagehilfe, die aus Blech gestanzt und gebogen ist, besitzt einen Ringabschnitt, der stirnseitig an den Wangen des Kupplungsstückes mittels Blechlaschen festgelegt wird. Am Ringabschnitt ist eine parallel zu diesem liegende und mit diesem Ringabschnitt einstückig ausgebildete Lasche vorgesehen, an deren Seitenränder hochgebogene Klappen angeformt sind. Ist die Montagehilfe an der Stirnseite des U-förmigen Kupplungsstückes festgelegt, so liegen die beiden erwähnten Klappen zwischen den beiden, die Durchsteckbohrungen für die Spannschrauben aufweisenden Seitenwangen des Kupplungsstückes und verdecken und verschließen dadurch diese Durchsteckbohrungen, so daß vorerst die Spannschraube nicht eingesetzt werden kann. Wird nun der Wellenzapfen des Lenkgetriebes eingeschoben, so wird dadurch die die Klappen tragende Lasche durch die Stirnseite des ein fahrenden Wellenzapfens nach außen gebogen und wenn der Wellenzapfen soweit eingeschoben ist, daß seine Ringnut fluchtend mit den Durchsteckbohrungen liegt, dann erst ist die die Klappe tragende Lasche soweit nach außen geschwenkt, daß nun die Spannschraube eingesetzt werden kann. Würde hingegen der Wellenzapfen nicht bis zum vorgesehenen Ausmaß eingeschoben, so wird dadurch die die Klappen tragende Lasche nicht ausreichend weit nach außen verschwenkt, wodurch die Klappen dann immer noch, wenigstens zum Teil die Durchstecköffnungen für die Spannschraube blockieren, so daß die Spannschraube vorerst nicht eingefügt werden kann.

Die Erfindung geht vom eingangs erörterten Stand der Technik aus und sie zielt darauf ab, Einrichtungen dieser Art konstruktiv zu vereinfachen, ohne dadurch jedoch die erwähnte Manipulationsmöglichkeit mit einer einzigen Hand zu beeinträchtigen, diese vielmehr zu verbessern, was nach der Erfindung durch jene Maßnahmen gelingt, die Gegenstand und Inhalt des kennzeichnenden Teiles des Patentanspruches 1 sind.

Um die Erfindung zu veranschaulichen, werden in der Folge Ausführungsbeispiele anhand der Zeichnung näher erläutert. Es zeigen:
- Fig. 1: in Schrägsicht und nach Art einer Explosionszeichnung die miteinander zu verbindenden Teile, jedoch ohne den als Montagehilfe vorgesehenen Blechteil;
- Fig. 2: eine erste Ausführungsform des als Montagehilfe dienenden Blechteiles in Ansicht;
- Fig. 3: in Seitensicht (Blickrichtung Pfeil A in Fig. 2);
- Fig. 4: von hinten (Blickrichtung Pfeil B in Fig. 3);
- Fig. 5: das Kupplungsstück im Längsschnitt mit eingesetztem Blechteil nach den Fig. 2 bis 4;
- Fig. 6: eine zweite Ausführungsform des als Montagehilfe dienenden Blechteiles von der Stirnseite her gesehen;
- Fig. 7: einen Schnitt nach der Linie VII - VII in Fig. 6;
- Fig. 8: einen Schnitt nach der Linie VIII - VIII in Fig. 6;
- Fig. 9: von oben gesehen (Blickrichtung Pfeil C in Fig. 6);
- Fig. 10: eine dritte Ausführungsform eines als Montagehilfe dienenden Blechteiles von der Stirnseite her gesehen;
- Fig. 11: von der Seite (Blickrichtung Pfeil D in Fig. 10);
- Fig. 12: von der Seite (Blickrichtung Pfeil E in Fig. 10);
- Fig. 13: von oben gesehen (Blickrichtung Pfeil F in Fig. 10);
- Fig. 14: die stirnseitige Ansicht des Kupplungsstückes mit eingelegtem Wellenzapfen und mit dem als Montagehilfe dienenden Blechteil nach den Fig. 6 bis 9;
- Fig. 15: die stirnseitige Ansicht eines Kupplungsstückes mit eingelegtem Wellenzapfen und mit dem als Montagehilfe dienenden Blechteil nach den Fig. 10 bis 13.

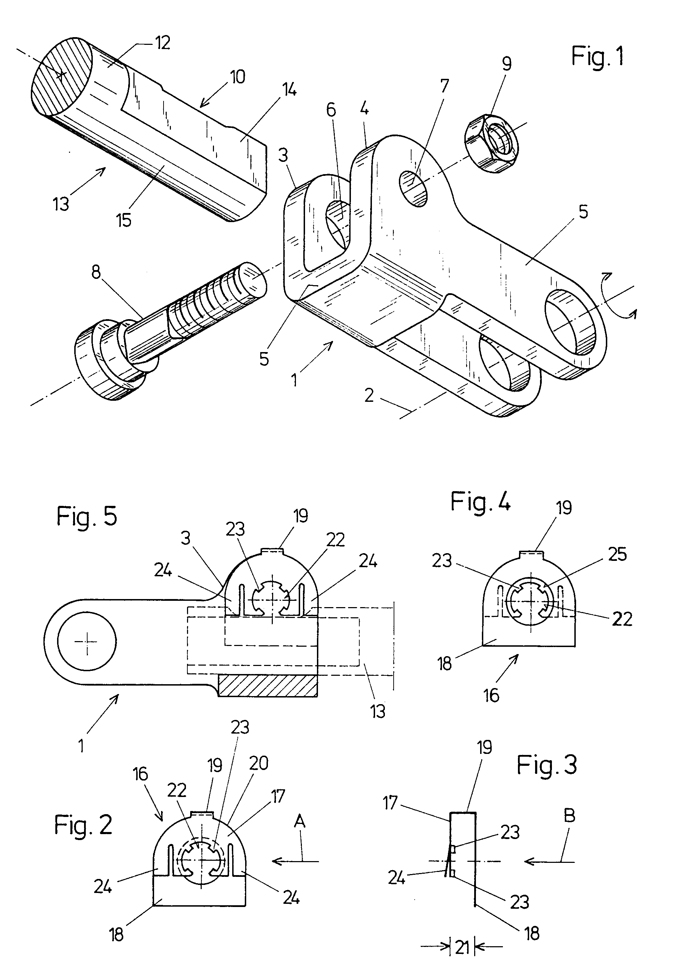

Fig. 1 zeigt in Schrägsicht und nach Art einer Explosionszeichnung die wesentlichen Elemente der hier in Rede stehenden Einrichtung. Am einen Ende einer hier nicht dargestellten Lenksäule oder Lenkwelle ist beispielsweise als Teil eines Kardangelenkes ein Kupplungsstück 1 angelenkt, das um seine Querachse 2 schwenkbar ist. Dieses Kupplungsstück 1 besitzt einen U-förmigen Querschnitt mit den Seitenwangen 3 und 4 und einen diese Seitenwangen 3 und 4 verbindenden Steg 5. In den beiden Seitenwangen 3 und 4 sind fluchtend zueinander liegende Bohrungen 6 und 7 vorgesehen. Diese Bohrungen 6 und 7 dienen zur Aufnahme einer Spannschraube 8 mit einem Kopf, einem Gewindeteil und einem Schaftabschnitt, hier mit linsenförmigem Querschnitt. Zum Fixieren der ordnungsgemäß eingesetzten Spannschraube dient eine Mutter 9, die hier als vom Kupplungsstück 1 unabhängiger und getrennter Bauteil gezeigt ist. Grundsätzlich ist es möglich, eine solche Mutter an der Außenseite der Wange 3 direkt aber drehbar anzuordnen. Dieses Kupplungsstück 1 hat den Abschnitt 13 eines Wellenzapfen 12 eines hier nicht dargestellten Lenkgetriebes aufzunehmen. Der Abschnitt 13 des Wellenzapfens 12 ist hier von drei winkelig zueinander stehenden Flächen 14 und einer in etwa korrespondierend zum Verlauf des Steges 5 verlaufenden Fläche 15 begrenzt, wobei die der Fläche 15 gegenüberliegende Fläche einen Einzug 10 aufweist, der in Verbindung mit der Spannschraube 8 als mechanische Sicherung dient.

Sind die hier gezeigten Teile montagebereit in einem Kraftfahrzeugchassis angeordnet, so nimmt der Wellenzapfen 12 innerhalb des Chassis eine ortsfeste Lage ein, ebenso die Querachse 2, um welche das Kupplungsstück 1 nach unten geschwenkt ist. Zur Verbindung dieser Teile wird nun das Kupplungsstück 1 um seine Querachse 2 nach oben geschwenkt, bis der Abschnitt 13 zwischen den Seitenwangen 3 und 4 und am Steg 5 anliegt. Dann wird die Spannschraube 8 durch die Bohrungen 6 und 7 gesteckt, die Mutter 9 auf das Gewinde der Schraube aufgedreht und festgezogen. Durch die Querschnittsgestaltung des Schaftes der Spannschraube 8 ist diese daran gehindert, sich zu verdrehen, da dieser Schaft mit seinem linsenförmigen Querschnitt seitlich an der durch den Einzug 10 gebildeten Fläche des Abschnittes 13 anliegt. Alle diese Montagevorgänge, wie vorstehend im einzelnen aufgelistet, müssen nun mit einer einzigen Hand bewerkstelligt werden.

Dafür ist nun als Montagehilfe ein Blechteil vorgesehen, der in einer ersten Ausführungsform in den Fig. 2 bis 4 veranschaulicht ist. Dieser Blechteil 16 besitzt einen ersten Abschnitt 17 und einen zweiten Abschnitt 18, die im wesentlichen parallel zueinander liegen und die, von der Seite gesehen (Fig. 3) eine U-Form zeigen. Die beiden im wesentlichen parallel zueinander liegenden Abschnitte 17 und 18 sind über eine schmale Lasche 19 miteinander einstückig verbunden. Die obere Randkontur 20, also der Verlauf der Begrenzungskanten dieser beiden Abschnitte 18 und 19, entspricht etwa dem Konturenverlauf der Seitenwangen 3 bzw. 4 des Kupplungsstückes 1. Der Abstand der beiden Abschnitte 18 und 19 voneinander (Fig. 3) entspricht der Wandstärke der Seitenwangen des Kupplungsstückes 1.

In dem dem Beschauer zugewandten Abschnitt 17 (Fig. 2) des Blechteiles 16 ist eine Aussparung 22 vorgesehen, von deren Rand einige spitzwinkelig nach hinten abstehende Laschen 23 ausgehen. Zu beiden Seiten dieser Aussparung 22 sind im Abschnitt 17 freigestanzte Zungen 24 vorgesehen, die spitzwinkelig nach vorne abgebogen sind (Fig. 3). Der hintere Abschnitt 18 ist im wesentlichen plan und besitzt eine zur Aussparung 22 korrespondierend und fluchtend liegende Bohrung 25, deren Durchmesser zweckmäßigerweise um ein geringes Maß größer sein kann als jener der Ausnehmung 22.

Dieser als Montagehilfe dienende, in Seitensicht (Fig. 3) U-förmige Blechteil 16 wird auf die eine Seitenwange 3 des Kupplungsstückes 1 aufgesteckt, wie dies aus der Schnittdarstellung nach Fig. 5 erkennbar ist. Die Ausnehmung 22 und die Bohrung 25 liegen dann deckungsgleich mit der Bohrung 7 der Seitenwange 3, wobei die Laschen 23 in die Bohrung 7 hineinragen und wenigstens einige dieser Laschen mit der Wandung dieser Bohrung einen spitzen Winkel einschließen. Das so ausgestattete Kupplungsstück 1 kann nun dank dieses einfachen, aus Federblech gefertigten Stanzteiles mit einer Hand montiert werden:

Wird das so ausgestattete Kupplungsstück auf den Abschnitt 13 des Wellenzapfens 12 geschwenkt, so drückt der Abschnitt 13 vorerst die federnden Zungen 24 flach, bis er sie zur Gänze überfahren hat, worauf sie aufgrund ihrer Elastizität wiederum vorspringen und nun auf der Fläche des Einzuges 10 als widerhakenartige Rückfallsperre aufliegen. In Fig. 5 ist der eingeschwenkte Abschnitt 13 strichliert eingetragen. Nun wird die Spannschraube 8 vorerst ungehindert durch die Bohrung 6 gesteckt und anschließend durch die Aussparung 22 mit den Laschen 23 durch die Bohrung 7. Die Laschen 23 lassen aufgrund ihrer Anordnung zwar das Einstecken bzw. Durchstecken des Gewindes ohne weiteres zu, die Spannschraube 8 kann aber nun nicht mehr zurückgezogen werden, da diese federnden Laschen 23 formschlüssig und spitzwinkelig in das Gewinde der Spannschraube 8 eingreifen. Durch den Querschnitt des Schaftes ist die Spannschraube 8 gegen Verdrehen gesichert. Nun wird die Mutter 9 auf das gegenüber der Seitenwange 3 vorstehende Ende des Gewindes der Spannschraube 8 aufgedreht und mittels eines geeigneten Werkzeuges angezogen, ohne daß es einer Gegenhalterung für die Schraube bedarf. Alle diese Montagevorgänge können der Reihe nach mit einer einzigen Hand getätigt werden.

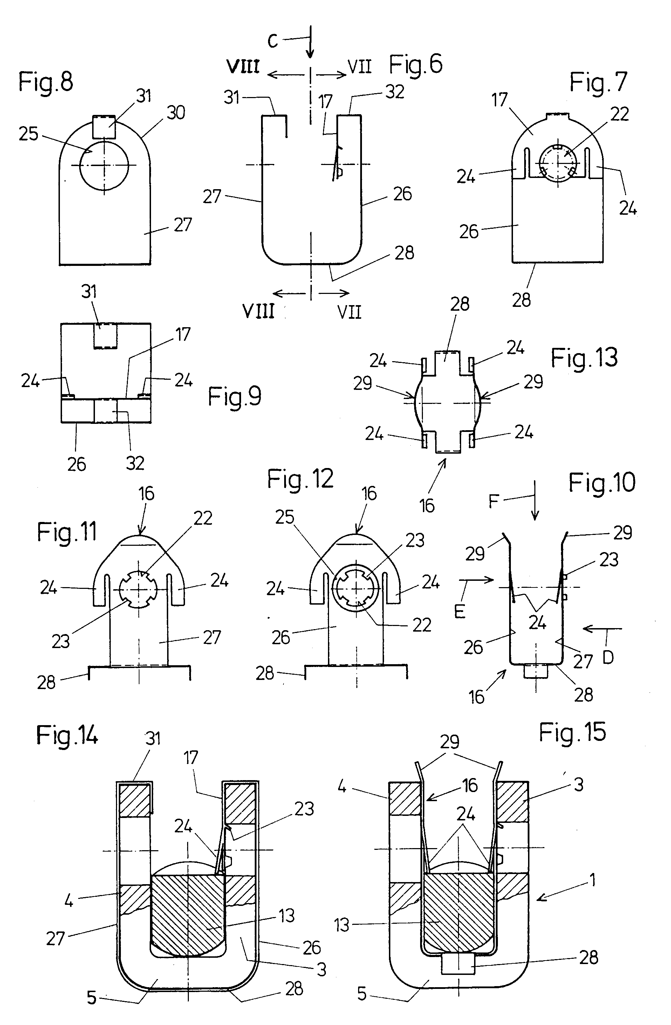

Ein anderes Ausführungsbeispiel für einen solchen Blechteil 16 zeigen die Fig. 10 bis 13. Dieser U-förmige Blechteil besitzt zwei Seitenwangen 26 und 27 und einen sie verbindenden Steg 28, wobei der Steg 28 breiter ist als die erwähnten Wangen, und die gegenüber den Seitenwangen 26 und 27 vorstehenden Abschnitte des Steges 28 nach unten gebogen sind (Fig. 11, Fig. 12). Die Seitenwangen 26 und 27 dieses U-förmigen Blechteiles sind nun in der Weise ausgebildet, wie dies im Zusammenhang mit den Fig. 2 bis 4 erläutert worden ist: In der einen Wange 27 ist die Aussparung 22 mit den Laschen 23 vorgesehen. Die andere Seitenwange 26 hat eine damit fluchtend liegende Bohrung 25, und in beiden Seitenwangen 26 und 27 sind paarweise je freigestanzte Zungen 24 aufgebogen. Diese Seitenwangen 26 und 27 sind etwas höher als die Seitenwangen 3 und 4 des Kupplungsstückes 1, so daß sie, wenn sie funktionsgerecht eingesetzt sind, das Kupplungsstück nach oben etwas überragen (siehe Fig. 15). Die jeweils nach oben vorstehenden Abschnitte 29 sind etwas nach außen gebogen und bilden so einen keilförmigen Einfahrschlitz für den Abschnitt 13 des Wellenzapfens 12. Die Anordnung dieses Blechteiles 16 am bzw. im Kupplungsstück 1 zeigt in Stirnansicht die Fig. 15. Auch bei der Anwendung dieses Blechteiles kann die Verbindung mit einer einzigen Hand montiert werden, und zwar in der Weise, wie dies oben im Zusammenhang mit dem erstbesprochenen Ausführungsbeispiel erläutert worden ist. Die nach oben überstehenden Abschnitte 29, die einen keilförmigen Einfahrschlitz begrenzen, erleichtern darüber hinaus noch das Einschwenken des Abschnittes 13 des Wellenzapfens 12.

Ein drittes Ausführungsbeispiel für einen als Montagehilfe dienenden Blechteil 16 ist in den Fig. 6 bis 9 gezeigt. Auch dieser Blechteil 16 ist U-förmig, besitzt Seitenwangen 26 und 27 und einen diese Seitenwangen verbindenden Steg 28. An der oberen Kontur bzw. Begrenzungskante 30 der einen Seitenwange 27 ist eine nach innen kragende umgebördelte Lasche 31 vorgesehen. Auch an der oberen Begrenzungskante der anderen Seitenwange 26 ist eine Lasche 32 angeordnet, die nach innen abgebogen ist und an welcher der Abschnitt 17 anschließt mit den Zungen 24, der Aussparung 22 und den Laschen 23, der genauso ausgebildet ist wie der Abschnitt 17 des erstbesprochenen Ausführungsbeispieles. Bei der ordnungsgemäßen Montage dieses Blechteiles 16 liegt dieser am Kupplungsstück 1 von außen an, was Fig. 14 veranschaulicht. Auch hier werden die einzelnen, die Einrichtung bildenden Teile in der Folge mit einer einzigen Hand zusammengebaut, wie dies oben bei den anderen beiden Ausführungsbeispielen schon erörtert wurde.

Das erstbesprochene und das letztbesprochene Ausführungsbeispiel haben gegenüber der zweitbesprochenen Ausführungsform den Vorteil, daß der Wellenzapfen 12 bzw. dessen Abschnitt 13 direkt und unmittelbar vom U-förmigen Querschnitt des Kupplungsstückes 1 aufgenommen ist und an dessen Seitenwangen bzw. an dessen Steg anliegen, wogegen bei der zweitbesprochenenen Ausführungsform (siehe auch Fig. 15) zwischen den genannten Teilen der Blechteil 16 verbleibt.

## Patentansprüche

1. Einrichtung zum Verbinden einer Lenksäule eines Kraftfahrzeuges mit einem Wellenzapfen (12) eines Lenkgetriebes, wobei die Einrichtung ein im Querschnitt U-förmiges Kupplungsstück (1) aufweist, das um eine Querachse (2) schwenkbar an der Lenksäule angelenkt ist und in den Seitenwangen (3, 4) des U-förmigen Kupplungsstückes fluchtend zueinander angeordnete Bohrungen (6, 7) zur Aufnahme einer gegen Verdrehung gesicherten Spannschraube (8) vorgesehen sind und die Spannschraube (8) mittels einer Mutter (9) fixierbar ist, dadurch gekennzeichnet, daß an der Innenseite wenigstens einer Seitenwange (3) des Kupplungsstückes (1) als Montagehilfe ein Blechteil (16) anliegt mit einer mit der Bohrung (7) der Seitenwange (3) im wesentlichen deckungsgleichen Aussparung (22), an deren Rand in die Bohrung (7) der Seitenwange (3) ragende Laschen (23) angeformt sind, und seitlich der Aussparung (22) freigestanzte Zungen (24) vorgesehen sind, die zur Mittelebene des U-förmigen Kupplungsstückes (1) und gegen den die Seitenwangen (3, 4) desselben verbindenden Steg (5) ragen und deren stirnseitige Kanten bei in das Kupplungsstück (1) eingelegtem Wellenzapfen (12) an diesem widerhakenartig als Rückfallsperre anliegen.

2. Einrichtung nach Anspruch 1, dadurch gekennzeichnet, daß der Blechteil (16) an seiner dem Steg (5) des Kupplungsstückes (1) abgewandten Außenkontur (20) mindestens eine eine Seitenwange (3) des Kupplungsstückes (1) übergreifende Lasche (19) aufweist, die mit der Stirnkante der Seitenwange (18) eines U-förmigen Blechbügels verbunden ist, und der Blechteil (16) und die Seitenwange (18) des U-förmigen Blechbügels etwa parallel zueinander liegen, wobei der Abstand (21) dieser beiden Teile zueinander etwa der Wandstärke der Seitenwange (3) des Kupplungsstückes (1) entspricht und eine Seitenwange (3) des Kupplungsstückes (1) zwischen diesen Teilen liegt (Fig. 2, 3, 4).

3. Einrichtung nach Anspruch 2, dadurch gekennzeichnet, daß an der Stirnkante (30) der anderen Seitenwange (27) des U-förmigen Blechbügels ebenfalls eine eine Seitenwange des Kupplungsstückes (1) übergreifende Lasche (31) angeformt ist (Fig. 6, 8, 9).

4. Einrichtung nach Anspruch 2 oder 3, dadurch gekennzeichnet, daß der U-förmige Blechbügel am Kupplungsstück (1) außenseitig anliegt (Fig. 14).

5. Einrichtung nach Anspruch 1, dadurch gekennzeichnet, daß der Blechteil U-förmig ausgebildet ist und in seinen Seitenwangen (26, 27) mit den Bohrungen (6, 7) des Kupplungsteiles (1) deckungsgleich liegende Ausnehmungen (22, 25) aufweist und dieser Blechteil am U-förmigen Kupplungsstück (1) innseitig anliegt (Fig. 15).

6. Einrichtung nach Anspruch 5, dadurch gekennzeichnet, daß an beiden Seitenwangen (26, 27) des U-förmigen Blechteiles (16) zu beiden Seiten der Ausnehmungen (22) paarweise freigestanzte Zungen (24) vorgesehen sind.

7. Einrichtung nach Anspruch 1, dadurch gekennzeichnet, daß zumindest einige der am Rand der Ausnehmungen (22) des Blechteiles (16) vorgesehenen, in eine Bohrung (7) der Seitenwange (3) des Kupplungsstückes (1) ragenden Laschen (23) mit der Bohrungswand einen spitzen Winkel einschließen.

8. Einrichtung nach Anspruch 1 oder 7, dadurch gekennzeichnet, daß die Ausnehmung (22) mit den in die Bohrung (7) der Seitenwange (3) des Kupplungsstückes (1) ragenden Laschen (23) an jener Seitenwange (3) des Kupplungsstückes (1) liegt, an welcher die Mutter (9) Für die Spannschraube (8) anliegt.

9. Einrichtung nach Anspruch 5, dadurch gekennzeichnet, daß der die Seitenwangen (26, 27) des U-förmigen Blechteiles (16) verbindende Steg (28) breiter ist als die Seitenwangen (26, 27) und der gegenüber den Seitenwangen auskragende Teil des Steges (28) nach unten abgebogen ist (Fig. 11, 12).

10. Einrichtung nach Anspruch 5, dadurch gekennzeichnet, daß die Seitenwangen (26, 27) des U-förmigen Blechteiles (16) die Seitenwangen (3, 4) des Kupplungsstückes (1) nach oben überragen und die vorstehenden Abschnitte (29) zur Bildung eines keilförmigen Einlegespaltes nach außen gebogen sind und mit der Mittelebene des Kupplungsstückes (1) je einen spitzen Winkel einschließen (Fig. 15).

## Claims

1. A device for connecting a steering column of a car to a shaft journal (12) of a steering mechanism, wherein the device has a coupling component (1) which is U-shaped in cross-section and linked to the steering column so as to be pivotable about a transverse axis (2), and in the side walls (3, 4) of the U-shaped coupling component, drilled holes (6, 7) are provided in alignment with each other for receiving a tightening screw (8) prevented from turning and securable by means of a nut (9), **characterised in that** a sheet metal part (16) used to aid assembly rests against the inside of at least one side wall (3) of the coupling component (1) and has one recess (22) substantially congruent to the drilled hole (7) of the side wall (3), and tabs (23) projecting into the drilled hole (7) of the side wall (3) are formed integrally on the edge [of the recess], and at the side of the recess (22), punched-out clasps (24) are provided which project to the median plane of the U-shaped coupling component (1) and towards the web (5) connecting the side walls (3, 4) of the [U-shaped component], and the front edges [of the clasps] rest against the shaft journal (12) in a barblike manner to prevent return when the shaft journal (12) is fitted into the coupling component (1).

2. A device according to Claim 1, **characterised in that** the sheet metal component (16) has, on the exterior (20) thereof facing away from the web (5) of the coupling component (1), at least one tab (19) which overlaps a side wall (3) of the coupling component (1) and is connected to the front edge of the side wall (18) of a U-shaped sheet metal hoop, and the sheet metal part (16) and the side wall (18) of the U-shaped sheet metal hoop are approximately parallel to each other, wherein the distance (21) of these two parts from each other corresponds approximately to the thickness of the side wall (3) of the coupling component (1), and a side wall (3) of the coupling component (1) is situated between the said parts (Fig. 2, 3, 4).

3. A device according to Claim 2, **characterised in that** there is also a tab (31) overlapping a side wall of the coupling component (1) and formed integrally (Fig. 6, 8, 9) on the front edge (30) of the second side wall (27) of the U-shaped sheet metal hoop.

4. A device according to Claim 2 or 3, **characterised in that** the U-shaped sheet metal hoop lies against the outside of the coupling component (1) (Fig. 14).

5. A device according to Claim 1, **characterised in that** the sheet metal component is U-shaped and has notches (22, 25) situated in the side walls (26, 27) thereof congruent to the drilled holes (6, 7) of the coupling component (1), and the said sheet metal part rests against the inside of the U-shaped coupling component (1) (Fig 15).

6. A device according to Claim 5, **characterised in that**, on both side walls (26, 27) of the U-shaped sheet metal part (16), punched-out clasps (24) are provided in pairs at both sides of the notches (22).

7. A device according to Claim 1, **characterised in that** at least some of the tabs (23) projecting into a drilled hole (7) of the side wall (3) of the coupling component (1) and provided on the edge of the notches (22) of the sheet metal part (16) form an acute angle with the drilled-hole wall.

8. A device according to Claim 1 or 7, **characterised in that** the notch (22) with the tabs (23) projecting into the drilled hole (7) of the side wall (3) of the coupling component (1) lies on that side wall (3) of the coupling component (1) against which the nut (9) for the tightening screw (8) rests.

9. A device according to Claim 5, **characterised in that** the web (28) connecting the side walls (26, 27) of the U-shaped sheet metal part (16) is wider than the side walls (26, 27) and the part of the web (28) projecting in relation to the side wall is bent downwards (Fig. 11, 12).

10. A device according to Claim 5, **characterised in that** the side walls (26, 27) of the U-shaped sheet metal part (16) project up over the side walls (3, 4) of the coupling component (1) and the protruding sections (29) for forming a wedge-shaped insertion gap are bent outwards and each form an acute angle with the median plane of the coupling component (1) (Fig. 15).

## Revendications

1. Dispositif pour relier une colonne de direction d'un véhicule automobile au tourillon d'arbre (12) d'un mécanisme de direction, le dispositif présente une pièce d'accouplement (1) en forme de U en coupe, qui peut pivoter autour d'un axe transversal (2) par articulation sur la colonne de direction, et des perçages alignés (6, 7) sont disposés face à face dans les joues latérales (3, 4) de la pièce d'accouplement en U pour loger une vis de serrage (8) qui ne peut pas tourner et on peut fixer la vis de serrage (8) au moyen d'un écrou (9), caractérisé en ce qu'une pièce de tôle (16) en tant qu'auxiliaire de montage repose sur au moins une joue latérale (3) de la pièce d'accouplement (1), avec un évidement (22) qui recouvre sensiblement le perçage (7) de la joue latérale (3) sur le bord duquel sont formées des pattes (23) qui dépassent du bord dans le perçage (7) de la joue latérale (3), et on prévoit de chaque côté de l'évidement (22) des languettes estampées (24), qui vont jusqu'au plan médian de la pièce d'accouplement en forme de U (1) et qui s'appuie sur l'entretoise (5) reliant ses deux joues (3, 4) et dont les bords frontaux reposent sur le tourillon d'arbre (12) inséré dans la pièce d'accouplement (1) comme frein élastique.

2. Dispositif selon la revendication 1, caractérisé en ce que la pièce de tôle (16) sur son contour extérieur (20) opposé à l'entretoise (5) de la pièce d'accouplement (1) présente au moins une patte (19) dépassant d'une joue (3) de la pièce d'accouplement (1), qui est reliée au bord frontal de la joue (18) d'une équerre en U, et la pièce de tôle (16) et la joue (18) de l'équerre en tôle en U sont approximativement parallèles, l'intervalle (21) entre ces deux pièces correspond approximativement à l'épaisseur de paroi d'une joue (3) de la pièce d'accouplement (1) et une joue (3) de la pièce d'accouplement (1) se trouve entre ces pièces (figures 2, 3, 4).

3. Dispositif selon la revendication 2, caractérisé en ce que sur le bord frontal (30) de l'autre joue (27) de l'équerre en tôle en U se trouve également une patte (31) dépassant d'une joue de la pièce d'accouplement (1) (figures 6, 8, 9).

4. Dispositif selon la revendication 2 ou 3, caractérisé en ce que l'équerre en tôle en U repose à l'extérieur de la pièce d'accouplement (1). ( figure 14).

5. Dispositif selon la revendication 1, caractérisé en ce que la pièce de tôle est formée en U et qu'elle présente dans ses joues (26, 27) des évidements (22, 25) en coïncidence avec les perçages (6, 7) de la pièce d'accouplement (1) et que cette pièce en tôle repose à l'intérieur de la pièce d'accouplement (1) en U. (figure 15).

6. Dispositif selon la revendication 5, caractérisé en ce que sur les deux joues (26, 27) de la pièce de tôle en U (16), on prévoit de chaque côté des évidements (22) une paire de languettes estampée (24).

7. Dispositif selon la revendication 1, caractérisé en ce que quelques unes des pattes (23) dépassant dans un perçage (7) de la joue (3) de la pièce d'accouplement (1) prévues au bord des évidements (22) de la pièce de tôle (16) font un angle aigu avec la paroi du perçage.

8. Dispositif selon la revendication 1 ou 7, caractérisé en ce que l'évidement (22) avec les pattes (23) dépassant dans le perçage (7) de la joue (3) de la pièce d'accouplement (1) repose sur la joue (3) de la pièce d'accouplement (1), sur laquelle repose l'écrou (9) de la vis de serrage (8).

9. Dispositif selon la revendication 5, caractérisé en ce que l'entretoise (28) reliant les joues (26, 27) de la pièce de tôle en U (16) est plus large que les joues (26, 27), et la partie de l'entretoise (28) dépassant les joues est repliée vers le bas . (figures 11, 12).

10. Dispositif selon la revendication 5, caractérisé en ce que les joues (26, 27) de la pièce de tôle en U (16) dépassent vers le haut les joues (3, 4) de la pièce d'accouplement (1) et que les sections proéminentes (29) sont repliées vers l'extérieur pour former une fente d'insertion en coin et forment chacune un angle aigu avec le plan médian de la pièce d'accouplement (1).
